# FASCICULE DE BREVET EUROPEEN

(11) **EP 0 717 920 B1**
(45) Date de publication et mention de la délivrance du brevet: **11.08.1999**
(21) Numéro de dépôt: 95203514.5
(22) Date de dépôt: 15.12.1995
(51) Int. Cl.: A01D 34/68

(54) **Machine roulante à roues motrices perfectionnée du type tondeuse à gazon, débroussailleuse**
Fahrbare Maschine mit getriebenen Laufrädern wie Rasen- oder Buschmäher
Riding machine with driven wheels such as lawn- or brushmower

(30) Priorité: 19.12.1994 FR 9415370
(43) Date de publication de la demande: 26.06.1996
(73) Titulaire: Faur, Jean, 31100 Toulouse (FR)
(72) Inventeur: Faur, Jean, 31100 Toulouse (FR)
(74) Mandataire: Cabinet BARRE LAFORGUE & associés

(56) Documents cités:
- EP-A- 0 027 513
- DE-A- 4 019 021
- US-A- 2 691 421
- US-A- 4 117 652
- US-A- 5 343 678

## Description

L'invention concerne une machine roulante du type tondeuse à gazon, débroussailleuse. Elle s'applique aux machines roulantes autotractées à conducteur marchant, c'est-à-dire du type tenue et guidée à la main par l'utilisateur qui marche en la manoeuvrant, et vise également les machines roulantes autoportées à conducteur porté par ladite machine.

A l'heure actuelle, et tel que décrit dans les brevets US 4.159.614 et US 4.117.652, beaucoup de machines autotractées sont pourvues d'organes de sécurité commandés par une poignée dite "d'homme mort", conçue pour provoquer un débrayage de la liaison entre le moteur et les roues motrices lorsque l'utilisateur vient à lâcher cette poignée. De tels organes de sécurité ont pour avantage de supprimer la motricité de la machine et par conséquent provoquent l'arrêt de cette dernière en cas d'incident. Toutefois, l'action de ces organes de sécurité étant une simple action de débrayage, la machine se trouve dans une configuration de roue libre une fois la poignée d'homme mort relâchée, et cette dernière peut donc continuer à avancer ou à reculer, spécifiquement sur des terrains pentus, avec les risques inhérents à de tels déplacements non contrôlés. Il est à noter, concernant les machines autoportées, que ces dernières sont dotées d'un frein de parking, mais sont toutefois dépourvues d'organes de sécurité visant à se garantir contre une fausse manoeuvre ou un défaut de fonctionnement.

Une des autres innovations concernant, depuis plusieurs années, les machines autotractées a consisté à doter ces dernières de moyens de transmission permettant de faire varier leur vitesse d'avancement et consistant soit en des boîtes de vitesse (équipant également les machines autoportées), soit en des moto-réducteurs associés à des variateurs de vitesse. De tels moyens, qui apportent un confort d'utilisation évident, présentent toutefois l'inconvénient d'être d'un prix de revient élevé, ce qui limite leur montage sur des machines de haut de gamme. De plus, les boîtes de vitesse utilisées s'avèrent d'une relative fragilité en cas de fausse manoeuvre.

Il convient de noter qu'une tondeuse autotractée de ce type est en outre dotée d'un frein de sécurité visant à pallier le premier inconvénient sus-mentionné. Cette machine, décrite dans le brevet US-5.343.678, comprend une boîte de vitesses, deux systèmes d'entraînement, soit un par roue motrice, constitués d'une courroie tendue entre un arbre solidaire de l'arbre de sortie de boîte et une poulie montée sur la roue, et deux systèmes de freinage comprenant un tambour de frein monté sur chaque roue, entre la poulie solidaire de la roue et le châssis. Toutefois, outre les problèmes de coût et de fragilité liés à cette construction sophistiquée, ce dispositif impose un important porte-à-faux des roues par rapport au châssis, et donc un accroissement préjudiciable de la largeur de passage minimale de la machine pour une largeur de coupe donnée.

L'invention a pour objectif de pallier les inconvénients précités des machines actuelles et a pour premier objectif de fournir une machine conçue pour s'immobiliser, quelle que soit la nature du terrain, lorsque cette machine n'est plus maîtrisée par un utilisateur.

Un autre objectif est de fournir une machine dotée d'un variateur de vitesse de conception très simple lui conférant un faible prix de revient et une très bonne fiabilité.

A cet effet, l'invention vise une machine roulante telle que tondeuse à gazon, débroussailleuse, comprenant un châssis porté par quatre roues, un moteur doté d'un arbre moteur d'entraînement en rotation d'une lame de coupe, un arbre récepteur s'étendant transversalement entre deux roues avant ou arrière, dites motrices, et relié auxdites roues motrices par des organes de transmission, et un ensemble mécanique de transmission reliant l'arbre moteur et l'arbre récepteur.

Selon l'invention, cette machine se caractérise en ce que :
- l'arbre récepteur se compose de trois tronçons longitudinaux consistant en un tronçon central et en deux embouts d'arbre, chacun desdits embouts d'arbre étant relié à une roue motrice, et étant monté sur le tronçon central par l'intermédiaire d'un dispositif de liaison unidirectionnelle,
- l'ensemble mécanique de transmission comprend :
   . une poulie motrice montée sur l'arbre moteur,
   . une poulie réceptrice montée sur un arbre intermédiaire parallèle à l'arbre récepteur, et s'étendant à proximité dudit arbre récepteur,
   . une transmission du type a courroie reliant les poulies motrice et réceptrice,
   . un engrenage de liaison de l'arbre intermédiaire et du tronçon central de l'arbre récepteur,
   . un levier, dit d'engrenage, portant l'arbre intermédiaire, articulé sur le châssis de façon à pouvoir pivoter autour d'un axe transversal parallèle audit arbre intermédiaire entre deux positions extrêmes, dites active et passive, correspondant respectivement à des états accouplé et désaccouplé de l'engrenage de liaison des arbres intermédiaire et récepteur, ledit levier d'engrenage étant associé à des moyens élastiques aptes à le solliciter vers sa position passive,
   . une manette à commande manuelle reliée au levier d'engrenage par une transmission de commande, apte à permettre de faire pivoter ledit levier vers sa position active, à l'encontre de l'action des moyens élastiques,
- des moyens de freinage par friction sont disposés en regard d'au moins un embout d'arbre récepteur et sont reliés au levier d'engrenage de façon à être entraînés par ce dernier et, d'une part, venir au contact et assurer le blocage en rotation d'au moins un embout d'arbre, dans la position passive de ce levier, et d'autre part être décollés dudit embout d'arbre et autoriser la rotation de ce dernier dans la position active dudit levier.

L'invention a donc consisté à réaliser une machine dont l'ensemble mécanique de transmission se trouve désaccouplé de façon automatique et immédiate lorsque l'utilisateur lâche la manette à commande manuelle, cette machine comportant en outre des moyens de freinage par friction dont l'action est également immédiate lorsque ladite manette est lâchée.

De plus, la conception de l'ensemble mécanique de transmission et l'agencement des moyens de freinage permettent d'obtenir un freinage très efficace en raison de la démultiplication classique de la liaison entre les embouts d'arbre et les roues motrices.

Par ailleurs, du fait de la conception de cette machine, cette dernière ne comporte pas de réducteur, du type par exemple à vis sans fin, la démultiplication entre l'arbre moteur et les roues motrices étant obtenue directement par l'intermédiaire de la transmission à courroie, de l'engrenage de liaison entre les arbres intermédiaire et récepteur, et des organes de transmission entre les embouts d'arbre et les roues motrices.

Selon une autre caractéristique de l'invention :
- le levier d'engrenage et les moyens de freinage sont agencés pour pouvoir présenter une position intermédiaire, dite de point mort, dans laquelle l'engrenage de liaison des arbres intermédiaire et récepteur est désaccouplé, et les moyens de freinage décollés de l'arbre récepteur,
- la manette à commande manuelle présente une position intermédiaire de blocage correspondant à la position de point mort précitée.

Cette disposition permet à l'utilisateur de disposer d'une position de point mort lui permettant de manoeuvrer aisément la machine sans toutefois avoir à couper le moteur. En outre, dans cette position point mort, la machine s'avère très facilement manoeuvrable car les roues motrices se trouvent désaccouplées de tout organe hormis les embouts d'arbre.

Selon une autre caractéristique de l'invention :
- la transmission par courroie est du type à courroie trapézoïdale et comprend une double poulie intermédiaire possédant deux gorges accolées, portée par un arbre parallèle à l'arbre moteur, une des gorges de ladite poulie intermédiaire ou la poulie motrice consistant en une poulie variatrice,
- des organes de mise en tension de la transmission par courroie sont reliés à la manette à commande manuelle par la transmission de commande, dans le prolongement du levier d'engrenage, et associés à des moyens élastiques présentant une force de tarage supérieure à celle des moyens élastiques associés audit levier d'engrenage, aptes à autoriser un déplacement desdits organes de mise en tension provoquant une augmentation de la largeur de la gorge de la poulie variatrice, une fois le levier d'engrenage parvenu dans sa position active, par une action supplémentaire exercée sur la manette de commande manuelle à l'encontre de l'action desdits moyens élastiques.

Une telle machine comporte donc un variateur de vitesse de conception très simple permettant, à partir d'une vitesse minimale obtenue automatiquement en premier lieu, d'augmenter la vitesse d'avancement par une simple action exercée sur la manette à commande manuelle, dans la continuité de l'action exercée sur cette manette en vue d'engrener l'ensemble de transmission mécanique.

Il est à noter en outre que les moyens élastiques associés aux organes de mise en tension de la transmission par courroie sont adaptés pour autoriser le déplacement de ces organes uniquement après engrenage de l'ensemble de transmission mécanique. En effet, le tarage de ces moyens élastiques est supérieur à celui des moyens élastiques associés au levier d'engrenage.

De plus, ces moyens élastiques sont adaptés, en cas d'incident, pour ramener les moyens de mise en tension vers leur position initiale correspondant à une vitesse minimale de rotation de la poulie réceptrice.

Selon un mode de réalisation préférentiel, les organes de mise en tension sont adaptés pour que la transmission par courroie se trouve dans une position débrayée dans la position de la manette à commande manuelle correspondant à la position active du levier d'engrenage, et pour amener ladite transmission dans une position embrayée de petite vitesse une fois cette position dépassée.

Ainsi, dans la position initiale précitée des organes de mise en tension, la vitesse de rotation de la poulie réceptrice, et donc de l'arbre qui la porte, est nulle. De ce fait, l'accouplement de l'engrenage de liaison des arbres intermédiaire et récepteur est réalisé sans heurt.

Selon une autre caractéristique de l'invention, la transmission par courroie comprend :
- deux courroies : une courroie motrice reliant la poulie motrice à une des gorges de la poulie intermédiaire, et une courroie réceptrice reliant l'autre gorge de la poulie intermédiaire et la poulie réceptrice,
- un galet de renvoi interposé sur le trajet de la courroie réceptrice, et agencé selon un angle incliné à 45 degrés.

De plus, selon un mode de réalisation préférentiel, les organes de mise en tension comprennent un levier d'embrayage articulé sur le châssis de façon à pouvoir pivoter autour d'un axe parallèle à l'axe moteur, et un galet d'embrayage porté par ledit levier d'embrayage et agencé pour venir au contact d'un des brins de la courroie motrice lors du pivotement de ce levier.

En outre, le levier d'embrayage porte, préférentiellement, un deuxième galet, dit de tension, agencé pour venir au contact interne du deuxième brin de la courroie motrice de façon à permettre d'obtenir la tension maximale de ladite courroie correspondant à la vitesse maximale.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins qui font partie intégrante de la présente description :

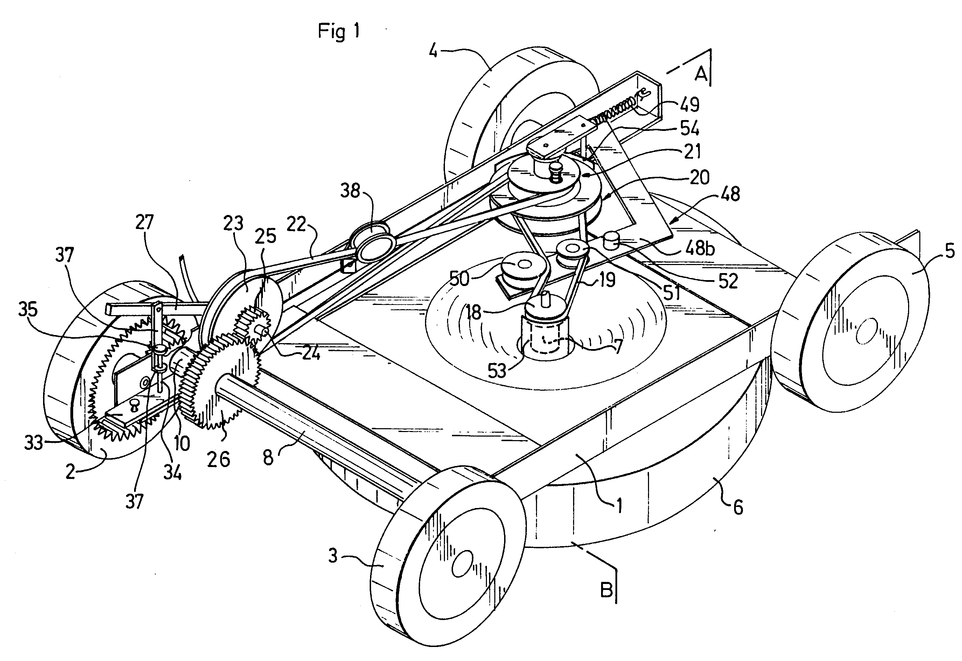

- la figure 1 est une vue en perspective d'une tondeuse à gazon selon l'invention, dont le moteur, les éléments de capotage et le guidon ne sont pas représentés,
- la figure 2 en est une vue longitudinale en coupe par un plan vertical A,

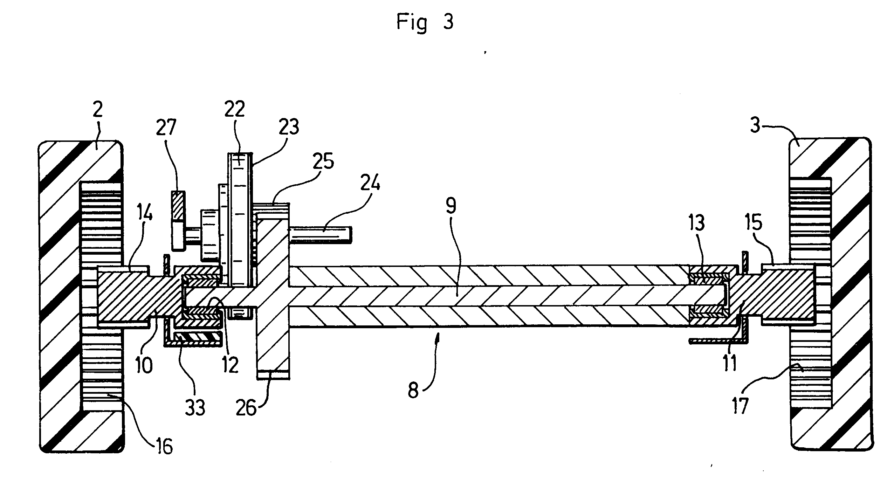

- la figure 3 en est une coupe transversale à échelle agrandie par un plan vertical B,
- la figure 4 est une coupe longitudinale par un plan vertical de la double poulie intermédiaire,
- la figure 5 est un schéma représentant la lumière de guidage de la manette à commande manuelle,
- les figures 6a à 10a sont des schémas explicatifs de fonctionnement, en vues frontales pour les figures 6a à 8a, et en vues de dessus pour les figures 9a et 10a,
- les figures 6b à 10b sont des schémas de fonctionnement correspondant respectivement aux figures 6a à 10a, en vues frontales pour les figures 6b et 7b, en vue de dessus pour la figure 8b, et en coupe verticale au droit de la poulie intermédiaire pour les figures 9b et 10b,
- et la figure 8c est un schéma de fonctionnement correspondant aux figures 8a et 8b, en vue en coupe selon un plan vertical C.

La tondeuse à gazon représentée à titre d'exemple aux figures est du type autotracté et comprend, de façon classique, un châssis 1 porté par quatre roues, deux roues arrière motrices 2, 3 et deux roues avant 4, 5, ledit châssis étant doté d'un carter 6 portant le moteur, dont seul l'arbre moteur 7 est représenté, d'entraînement en rotation d'une lame de coupe (non représentée sur les figures) et des roues motrices 2, 3.

Bien que ces derniers ne soient pas représentés sur les figures, à des fins de clarté des dessins, cette tondeuse à gazon est en outre pourvue de tous les organes habituels équipant ce type de machine, tels que guidon, réservoir, moyens de réglage en hauteur des roues...

Conformément à l'invention, cette tondeuse à gazon est équipée d'un ensemble mécanique de transmission décrit en détail ci-après, qui transmet le mouvement de rotation à un arbre récepteur 8 s'étendant transversalement entre les deux roues motrices 2, 3.

Cet arbre récepteur 8 se compose de trois tronçons longitudinaux consistant en un tronçon central 9 auquel est transmis le mouvement de rotation, et en deux embouts d'arbre 10, 11 montés sur le tronçon central 9 par l'intermédiaire de dispositifs de liaison unidirectionnelle 12, 13 du type par exemple roue libre à rouleaux coniques.

Ces deux embouts d'arbres 10, 11 se présentent extérieurement sous la forme de rouleaux prolongés axialement par des roues dentées 14, 15, coopérant de façon classique avec des couronnes dentées 16, 17 solidaires des roues 2, 3, formant avec ces roues dentées 14, 15 des engrenages hypocycloïdaux.

L'ensemble mécanique de transmission comprend une poulie motrice 18 montée sur l'arbre moteur 7 et portant une courroie trapézoïdale motrice 19 pour entraîner une poulie variatrice 20.

Cette poulie variatrice 20 est accolée à une seconde poulie fixe 21 coaxiale qui entraîne, par l'intermédiaire d'une courroie trapézoïdale réceptrice 22, une poulie réceptrice 23 montée sur un arbre intermédiaire 24 parallèle à l'arbre récepteur 8 et s'étendant à proximité de ce dernier.

De plus, un galet 38 de renvoi et de réglage de la tension de la courroie réceptrice 22 est interposé sur le trajet de cette dernière, et agencé avec son axe incliné à 45 degrés de façon à dévier la trajectoire de ladite courroie.

Sur l'arbre intermédiaire 24 est en outre montée une roue dentée 25 agencée pour coopérer avec une roue dentée 26 de plus grand diamètre, montée sur le tronçon central 9 de l'arbre récepteur 8.

Cet arbre intermédiaire 24 est lui-même porté par un levier 27 articulé sur le châssis 1 de façon à pouvoir pivoter autour d'un axe horizontal transversal entre deux positions extrêmes : une position active où les roues dentées 25, 26 coopèrent, assurant la transmission à l'arbre récepteur 8 de la rotation de la poulie réceptrice 23, et une position passive où les roues dentées 25, 26 sont désaccouplées.

Ce levier 27 est en outre relié au châssis 1 par l'intermédiaire d'un ressort 28 agencé pour solliciter ledit levier vers sa position passive. Le pivotement de ce levier 27 vers sa position active est quant à lui réalisé, à l'encontre de l'effort exercé par le ressort 28, par l'intermédiaire d'une manette 29 disposée au niveau du guidon (non représenté), et reliée audit levier par une transmission classique à câble 30.

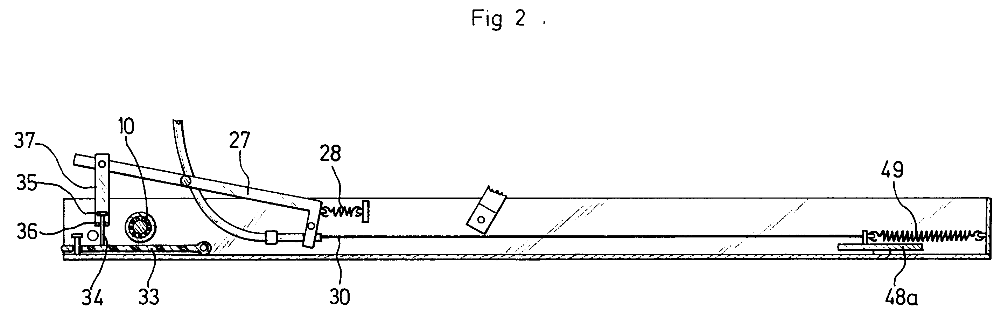

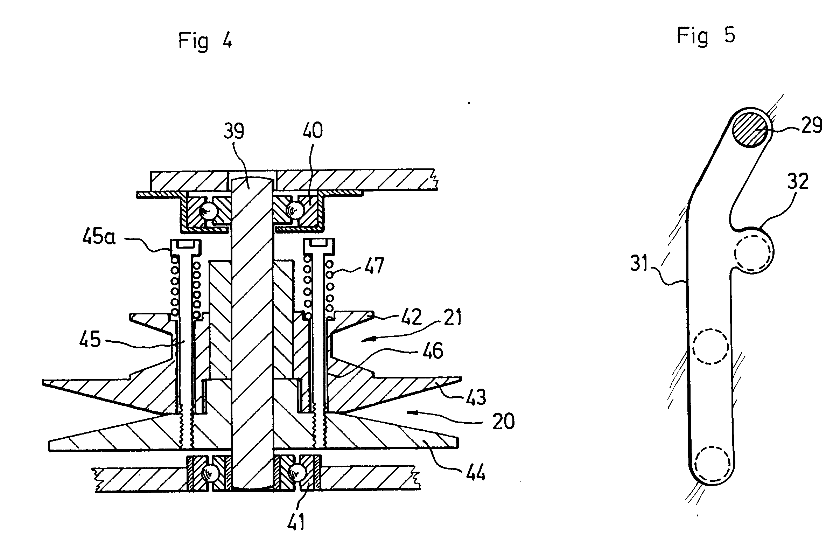

Tel que schématisé à la figure 5, cette manette 29 est guidée à l'intérieur d'une lumière 31 et entraîne lors de son déplacement vers le bas (en se référant à ladite figure) une traction du câble 30 provoquant le pivotement du levier 27 dans le sens contraire des aiguilles d'une montre (en se référant à la figure 2).

De plus, cette lumière de guidage 31 comporte un renfoncement latéral 32 de blocage de la manette 29 correspondant à une position intermédiaire du levier 27 où ce dernier se trouve entre ses positions active et passive, les roues dentées 25, 26 étant désaccouplées.

Il est à noter que la forme de ce renfoncement latéral 32, dont le but est décrit ci-après, est adaptée pour que la manette 29 pénètre dans ce dernier uniquement si l'utilisateur dévie volontairement cette manette 29 de son trajet délimité par la lumière 31. Dans tous les autres cas, du fait de l'action du ressort 28, la manette 29 revient dans sa position initiale correspondant à la position passive du levier 27, dès qu'elle est relâchée par l'utilisateur.

Associés au levier 27, la machine selon l'invention comporte, en outre, des moyens de freinage par friction adaptés pour venir s'appliquer contre l'extrémité en forme de rouleau de l'embout d'arbre 10 disposé à l'aplomb de ce levier 27, dans la position passive de ce dernier.

Ces moyens de freinage comprennent une plaque longitudinale 33 en un matériau tel que du Téflon (marque déposée), articulée sur le châssis de façon à pouvoir pivoter entre une position freinée où elle vient au contact inférieur de l'embout d'arbre 10, et une position défreinée où elle se trouve à distance sous ledit embout.

En vue de ce pivotement, une tige 34 dotée d'une tête supérieure 35 s'étend orthogonalement par rapport à la face supérieure de la plaque 33, à l'opposé de l'axe d'articulation de cette plaque 33 par rapport à l'embout d'arbre 10, ladite tige traversant un oeillet 36 à axe vertical porté vers l'extrémité basse d'une patte 37 solidaire du levier 27.

La tête 35 de cette tige 34 et cet oeillet 36 sont agencés pour venir en contact lors du pivotement du levier 27 vers sa position passive, entraînant ainsi un pivotement de la plaque 33 vers sa position freinée. De ce fait, dès que la manette 29 est relâchée, le pivotement automatique du levier 27 dû à l'action du ressort 28 amène un pivotement de la plaque 33 vers sa position freinée où elle bloque en rotation l'embout d'arbre 10. De plus, du fait de la démultiplication entre la roue dentée 14 de cet embout d'arbre 10 et la couronne 16 de la roue, ce freinage s'avère d'une très bonne efficacité.

En outre, l'agencement des moyens de freinage est conçu pour que, dans la position intermédiaire du levier 27 obtenue en positionnant la manette 29 dans le renfoncement 32, la plaque de freinage 33 ne soit pas au contact de l'embout d'arbre 10. On obtient ainsi une position "point mort" permettant de manoeuvrer la tondeuse.

Les poulies coaxiales 20, 21 sont quant à elles portées par un axe vertical 39 monté rotatif à l'intérieur de deux roulements 40, 41 solidaires du châssis 1. La poulie fixe 21 est disposée au-dessus de la poulie variatrice 20 et comporte, d'un seul tenant, deux flasques supérieur 42 et inférieur 43, ledit flasque inférieur 43 faisant office de flasque supérieur pour la poulie variatrice 20.

Cette poulie variatrice 20 comporte, quant à elle, outre le flasque fixe 43, un flasque inférieur 44 mobile verticalement, porté par deux tiges verticales telles que 45 à tête cylindrique 45a, s'étendant au travers d'alésages tels que 46 ménagés dans le moyeu de la poulie fixe 21.

En outre, des ressorts, tels que 47, sont disposés autour des vis 45, entre la tête 45a de ces dernières et la face supérieure du flasque supérieur 42 de la poulie 21, de façon à solliciter axialement vers le haut le flasque mobile 44 de la poulie variatrice 20, c'est-à-dire à solliciter ce dernier vers sa position où il confère sa largeur minimale à la gorge de ladite poulie variatrice.

Par ailleurs, des moyens de mise en tension de la courroie motrice 19 sont adaptés pour faire varier progressivement la tension de ladite courroie entre deux positions extrêmes : une position débrayée où la rotation de la poulie motrice 18 n'est pas transmise, et une position embrayée grande vitesse.

Ces moyens de mise en tension comprennent un levier d'embrayage 48 présentant, vu en plan, la forme générale d'un U à branches inégales, dont l'extrémité d'une des branches 48a est articulée sur le châssis 1 de façon à permettre audit levier de pivoter autour d'un axe vertical.

Le pivotement de ce levier d'embrayage 48 vers sa position embrayée est assuré au moyen de la manette 29 par l'intermédiaire de la transmission par câble 30 qui s'étend à cet effet jusqu'audit levier auquel l'extrémité dudit câble est solidarisée.

Le pivotement inverse est obtenu au moyen d'un ressort 49 s'étendant entre le levier d'embrayage 48 et le châssis 1, et agencé pour provoquer ce pivotement en l'absence de maintien de la manette 29. Ce ressort 49 présente en outre une force de tarage supérieure à celle du ressort 28 associé au levier d'engrenage 27, de façon que l'actionnement de la manette 29 provoque dans un premier temps le pivotement du levier d'engrenage 27, puis dans un second temps, et uniquement une fois ce levier d'engrenage dans sa position active, le pivotement du levier d'embrayage 48.

Le levier d'embrayage 48 porte en outre, sur son autre branche 48b, deux galets dits d'embrayage 50 et de tension 51, agencés pour se trouver chacun en regard d'un brin de la courroie motrice 19, le galet d'embrayage 50 se trouvant à l'extérieur de ladite courroie, et le galet de tension 51 à l'intérieur de celle-ci.

Ces galets 50, 51 sont disposés à une distance l'un de l'autre adaptée pour que :
- dans la position débrayée du levier d'embrayage 48, la courroie motrice 19 ne soit pas sollicitée par lesdits galets, la gorge de la poulie variatrice 20 présentant alors, en outre, sa largeur minimale, en raison de l'action des ressorts 47,
- lors du pivotement du levier d'embrayage 48, ces galets 50, 51 viennent solliciter progressivement la courroie motrice 19, et maintenir cette courroie motrice 19 tendue malgré le rétrécissement du diamètre de la poulie variatrice 20.

En outre, en vue de s'assurer de l'absence de transmission de mouvement de rotation dans la position débrayée, d'une part, un pion fixe 52 est prévu sur la branche 48b du levier d'embrayage et, d'autre part, des pièces de butée 53, 54 de forme arrondie sont disposées en regard des poulies motrice 18 et variatrice 20 à distance de ces derniers.

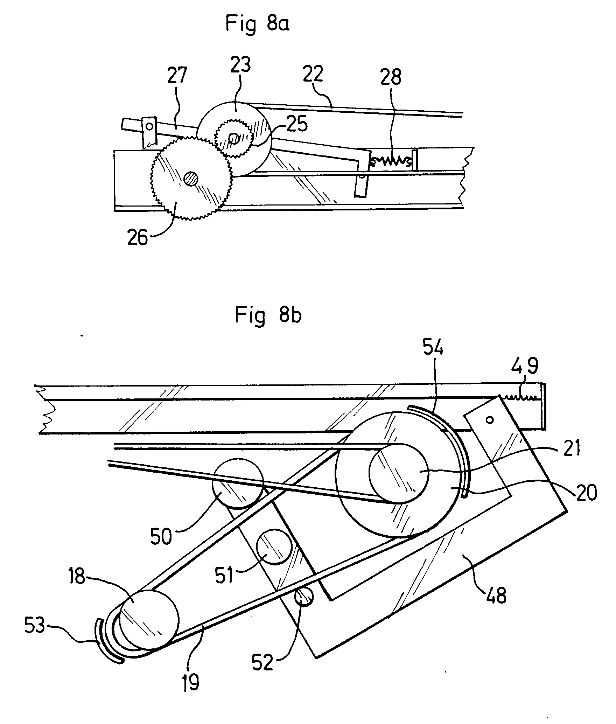

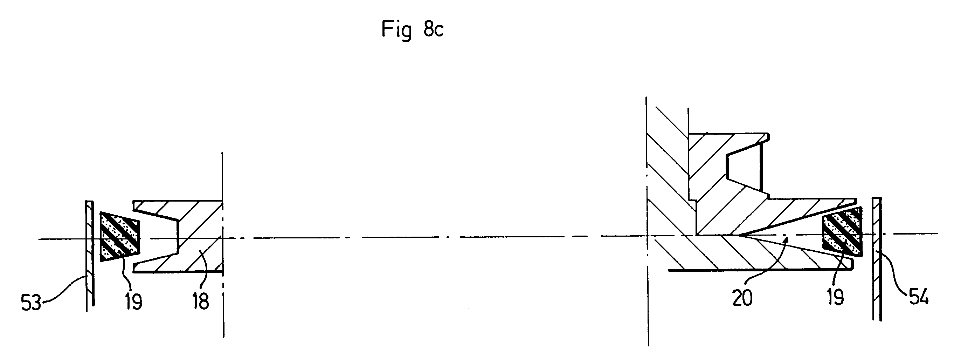

Tel que représenté aux figures 8b et 8c, le pion 52 permet, en association avec le galet d'embrayage 50, de maintenir les deux brins de la courroie motrice 19 sensiblement droits, dans la position débrayée. De plus, dans cette position débrayée, les pièces de butée 53, 54 amènent la courroie motrice 19 à se développer dans le prolongement de la poulie motrice 18. De ce fait, ces éléments garantissent ainsi la non-transmission du mouvement de rotation.

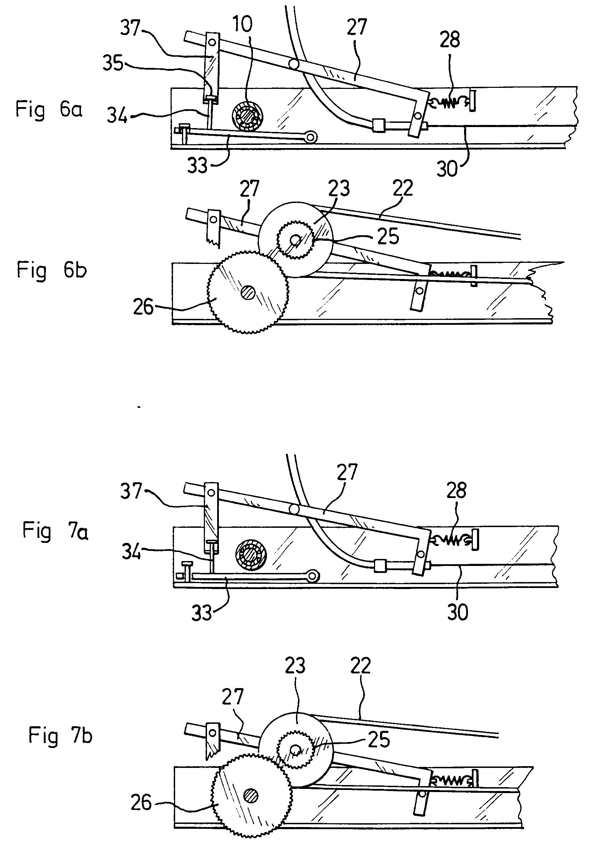

Le fonctionnement de cette machine est explicité ci-dessous en référence aux figures 6 à 10.

En premier lieu, et en l'absence de sollicitation de la manette 29, le levier d'embrayage 27 se trouve dans sa position passive dans laquelle il est maintenu par le ressort 28.

De ce fait, la machine se trouve en position freinée du fait de l'effort de friction appliqué par la plaque 33 sur l'embout d'arbre 10 (figure 6a). De plus, les roues dentées 25 et 26 sont désaccouplées (figure 6b).

Si l'utilisateur positionne la manette 29 dans le renfoncement latéral 32, la machine est alors amenée dans une position point mort représentée aux figures 7a et 7b dans laquelle l'embout d'arbre 10 n'est plus soumis à l'action de freinage de la plaque 33, et les roues dentées 25 et 26 sont toujours désaccouplées. Cette position de point mort permet donc de manoeuvrer aisément la machine.

L'accouplement des roues dentées 25 et 26 est obtenu, soit à partir de la position freinée, soit à partir de la position point mort, en actionnant la manette 29 de façon à faire pivoter le levier d'engrenage à l'encontre de la force exercée par le ressort 28.

Tel que représenté aux figures 8b et 8c, lors de cette phase, le levier d'embrayage 48 sollicité par le ressort 49 dont le tarage est supérieur à celui du ressort 28, est maintenu dans une position de débrayage où la rotation de la poulie motrice 18 n'est pas transmise à la poulie variatrice 20.

Il est à noter que le levier d'embrayage 48 se trouve également dans cette position de débrayage dans les positions freinée et point mort de la machine. De ce fait, l'accouplement des roues dentées 25 et 26 est réalisé sans heurt.

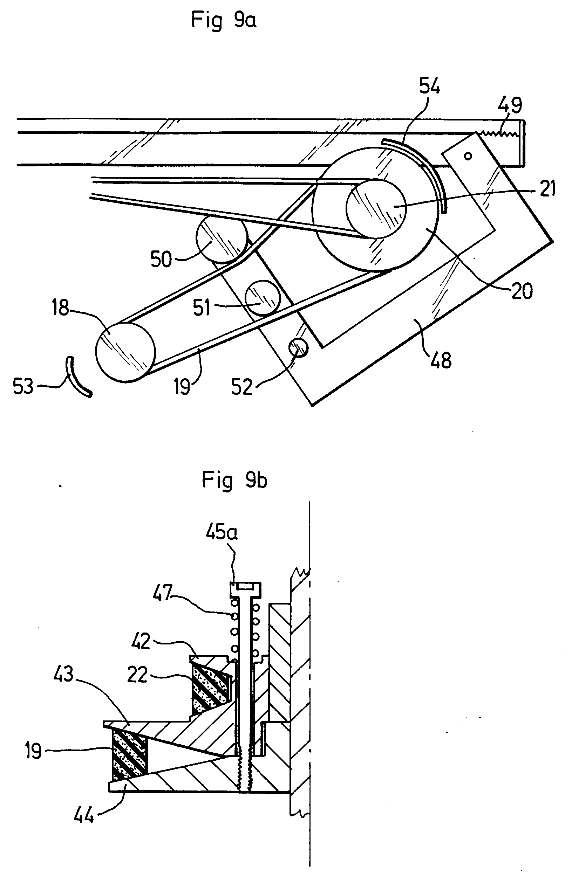

Une action supplémentaire exercée sur la manette 29 entraîne ensuite une rotation du levier d'embrayage 48 à l'encontre de la force exercée par le ressort 49, qui conduit le galet d'embrayage à solliciter la courroie motrice 19 (figure 9a). On obtient ainsi, dans un premier temps une position d'embrayage dans laquelle la machine se déplace avec une vitesse minimale du fait que la gorge de la poulie variatrice 20 possède sa largeur minimale équivalent au diamètre maximal de ladite poulie (figure 9b).

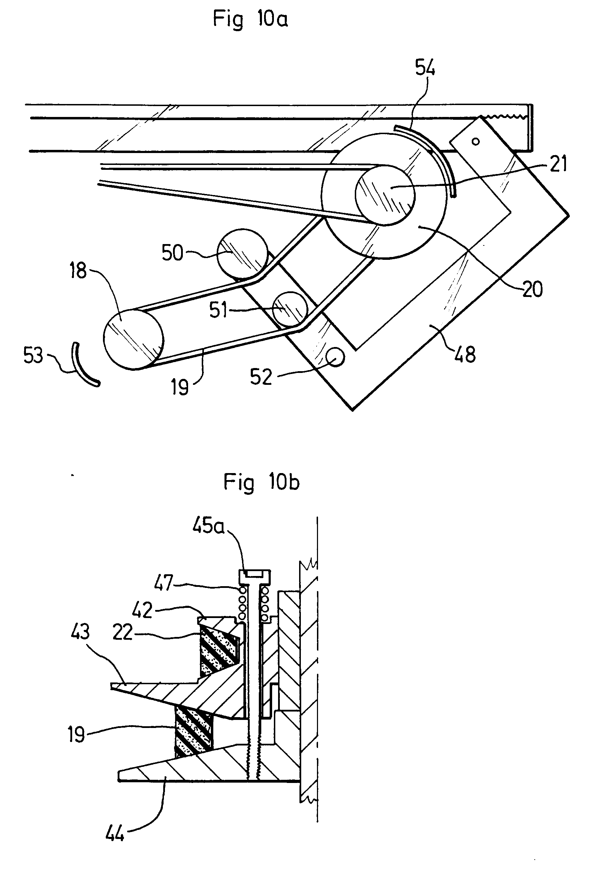

Le réglage de la vitesse est ensuite obtenu au moyen de la manette 29 en faisant plus ou moins pivoter le levier d'embrayage 48, la vitesse maximale d'avancement étant obtenue lorsque la gorge de la poulie variatrice 20 présente sa largeur maximale équivalent au diamètre minimal de ladite poulie (figure 10b).

Il est à noter que, lors des variations de diamètre de cette poulie variatrice 20, la courroie motrice 19 est maintenue tendue grâce à la présence du galet de tension 51 qui permet d'"absorber" ces variations de diamètre (figure 10a).

Une des caractéristiques essentielles de la machine selon l'invention réside dans le fait que, quelle que soit la position de la manette 29, mise à part la position de point mort obtenue uniquement par une action volontaire de l'utilisateur, dès que cette manette est relâchée, la machine se trouve quasi-instantanément débrayée et freinée grâce, soit à l'action du seul ressort 28, soit à l'action cumulée de ce ressort 28 et des ressorts 47, 49 en fonction de la position de ladite manette.

Par ailleurs, à titre d'exemple, les rapports de démultiplication peuvent avantageusement être les suivants :
- rapport variant entre un et deux, entre la poulie motrice 18 et la poulie variatrice 20,
- rapport de deux entre la poulie intermédiaire 21 et la poulie réceptrice 23,
- rapport de trois entre les roues dentées 25 et 26,
- rapport de l'ordre de six entre les pignons 13, 14 et les couronnes 16, 17 des roues motrices 2, 3.

Une telle démultiplication permet par exemple d'obtenir, dans le cas d'une débroussailleuse dont la vitesse de rotation du moteur est de 3 000 tours par minute, une vitesse d'avancement variant sensiblement entre 2,4 et 5 km/h.

## Revendications

1. Machine roulante telle que tondeuse à gazon, débroussailleuse, comprenant un châssis (1) porté par quatre roues (2-5), un moteur doté d'un arbre moteur (7) d'entraînement en rotation d'une lame de coupe, un arbre récepteur (8) s'étendant transversalement entre deux roues (2, 3) avant ou arrière, dites motrices, et relié auxdites roues motrices par des organes de transmission (14-17), et un ensemble mécanique de transmission (18-26) reliant l'arbre moteur (7) et l'arbre récepteur (8), ladite machine étant caractérisée en ce que :
- l'arbre récepteur (8) se compose de trois tronçons longitudinaux consistant en un tronçon central (9) et en deux embouts d'arbre (10, 11), chacun desdits embouts d'arbre étant relié à une roue motrice (2, 3) et étant monté sur le tronçon central (9) par l'intermédiaire d'un dispositif de liaison unidirectionnelle (12, 13),
- l'ensemble mécanique de transmission comprend :
. une poulie motrice (18) montée sur l'arbre moteur (7),
. une poulie réceptrice (23) montée sur un arbre intermédiaire (24) parallèle à l'arbre récepteur (8), et s'étendant à proximité dudit arbre récepteur,
. une transmission (19-22) du type à courroie reliant les poulies motrice (18) et réceptrice (23),
. un engrenage (25, 26) de liaison de l'arbre intermédiaire (24) et du tronçon central (9) de l'arbre récepteur (8),
. un levier (27) , dit d'engrenage, portant l'arbre intermédiaire (24), articulé sur le châssis (1) de façon à pouvoir pivoter autour d'un axe transversal parallèle audit arbre intermédiaire entre deux positions extrêmes, dites active et passive, correspondant respectivement à des états accouplé et désaccouplé de l'engrenage (25, 26) de liaison des arbres intermédiaire (24) et récepteur (8), ledit levier d'engrenage étant associé à des moyens élastiques (28) aptes à le solliciter vers sa position passive,
. une manette (29) à commande manuelle reliée au levier d'engrenage (27) par une transmission de commande (30) apte à permettre de faire pivoter ledit levier vers sa position active, à l'encontre de l'action des moyens élastiques,
- des moyens (33) de freinage par friction sont disposés en regard d'au moins un embout (10, 11) d'arbre récepteur et sont reliés au levier d'engrenage (27) de façon à être entraînés par ce dernier et, d'une part, venir au contact et assurer le blocage en rotation d'au moins un embout d'arbre (10, 11), dans la position passive de ce levier (27), et d'autre part être décollés dudit embout d'arbre et autoriser la rotation de ce dernier dans la position active dudit levier.

2. Machine autotractée selon la revendication 1, caractérisée en ce que :
- le levier d'engrenage (27) et les moyens de freinage (33) sont agencés pour pouvoir présenter une position intermédiaire, dite de point mort, dans laquelle l'engrenage (25, 26) de liaison des arbres intermédiaire (24) et récepteur (8) est désaccouplé, et les moyens de freinage (33) décollés de l'arbre récepteur (8),
- la manette à commande manuelle (29) présente une position intermédiaire de blocage correspondant à la position de point mort précitée.

3. Machine autotractée selon l'une des revendications 1 ou 2, caractérisée en ce que :
- la transmission par courroie (19-22) est du type à courroie trapézoïdale et comprend une double poulie intermédiaire (20, 21) possédant deux gorges accolées, portée par un arbre (39) parallèle à l'arbre moteur (7), une des gorges de ladite poulie intermédiaire (20, 21) ou la poulie motrice (18) consistant en une poulie variatrice,
- des organes (48-52) de mise en tension de la transmission par courroie (19-22) sont reliés à la manette à commande manuelle (29) par la transmission de commande (30), dans le prolongement du levier d'engrenage (27), et associés à des moyens élastiques (49) présentant une force de tarage supérieure à celle des moyens élastiques (28) associés audit levier d'engrenage, aptes à autoriser un déplacement desdits organes de mise en tension provoquant une augmentation de la largeur de la gorge de la poulie variatrice (20), une fois le levier d'engrenage (27) parvenu dans sa position active, par une action supplémentaire exercée sur la manette de commande manuelle (29) à l'encontre de l'action desdits moyens élastiques.

4. Machine autotractée selon la revendication 3, caractérisée en ce que les organes de mise en tension (48-52) sont adaptés pour que la transmission par courroie (19-22) se trouve dans une position débrayée dans la position de la manette à commande manuelle (29) correspondant à la position active du levier d'engrenage (27), et pour amener ladite transmission dans une position embrayée de petite vitesse une fois cette position dépassée.

5. Machine autotractée selon l'une des revendications 3 ou 4, caractérisée en ce que la transmission par courroie comprend :
- deux courroies : une courroie motrice (19) reliant la poulie motrice (18) à une des gorges de la poulie intermédiaire (20, 21) et une courroie réceptrice (22) reliant l'autre gorge de la poulie intermédiaire (20, 21) et la poulie réceptrice (23),
- un galet de renvoi (38) interposé sur le trajet de la courroie réceptrice (23), et agencé selon un angle incliné à 45 degrés.

6. Machine autotractée selon la revendication 5, caractérisée en ce que les organes de mise en tension comprennent un levier d'embrayage (48) articulé sur le châssis (1) de façon à pouvoir pivoter autour d'un axe parallèle à l'axe moteur (7), et un galet d'embrayage (50) porté par ledit levier d'embrayage et agencé pour venir au contact d'un des brins de la courroie motrice (19) lors du pivotement de ce levier.

7. Machine autotractée selon la revendication 6, caractérisée en ce que le levier d'embrayage (48) porte un deuxième galet (51), dit de tension, agencé pour venir au contact du deuxième brin de la courroie motrice (19) de façon à permettre d'obtenir la tension maximale de ladite courroie correspondant à la vitesse maximale.

## Claims

1. Riding machine, such as a lawn or bush-mower, comprising a frame (1) supported on four wheels (2 - 5), a motor having a drive shaft (7) for rotatively driving a cutting blade, a driven shaft (8) extending transversally between a pair of front or rear so-called drive wheels (2, 3) and linked to said drive wheels by means of transmission members (14 - 17), and a mechanical transmission assembly (18 - 26) linking said drive and driven shafts (7, 8), said machine being characterized in that :
- said driven shaft (8) is comprised of three longitudinal sections consisting of a central section (9) and two shaft connectors (10, 11), wherein said shaft connectors are linked with a drive wheel (2, 3) and mounted on said central section (9) by means of a unidirectional linking device (12, 13),
- said mechanical transmission assembly comprises :
* a drive pulley (18) mounted on said drive shaft (7),
* a driven pulley (23) mounted on an intermediate shaft (24) parallel to the driven shaft (8) and extending near said driven shaft,
* a belt type transmission (19 - 22) linking said drive (18) and driven pulleys (23),
* a gear (25, 26) for linking the intermediate shaft (24) and the central section (9) of the driven shaft (8),
* a so-called gear lever (27) supporting the intermediate shaft (24) and pivotally mounted on frame (1) so as to be able to pivot about a transversal axis which is parallel to said intermediate shaft, between two so-called active and passive end positions corresponding to respective connected and disconnected conditions of the gear (25, 26) for linking said intermediate (24) and driven shafts (8), wherein said gear lever is associated with resilient means (28) able to bias it towards the passive position thereof,
* a manually operated handle (29) which is attached to the gear lever (27) by means of a control transmission (30) which is able to allow pivoting said lever into the active position thereof in opposition to the effect of the resilient means,
- friction brake means (33) are arranged opposite at least one driven shaft connector (10, 11) and are linked with the gear lever (27) so as to be actuated by said gear lever and, on the one hand, engage and block the rotation of at least one shaft connector (10, 11) in the passive position of said lever (27), and on the other hand be disengaged from said shaft connector and allow the rotation of said shaft connector in the active position of said lever.

2. Self-powered machine according to claim 1, characterized in that:
- the gear lever (27) and the brake means (33) are arranged such that they are able to take a so-called neutral intermediate position wherein the gear (25, 26) for linking the intermediate (24) and driven shafts (8) is disconnected and the brake means (33) are disengaged from the driven shaft (8),
- the manually operated handle (29) has an intermediate blocking position which corresponds to said neutral position.

3. Self-powered machine according to one of claims 1 or 2, characterized in that :
- the belt transmission (19 - 22) is of the V-belt type and comprises a double intermediate pulley (20, 21) having a pair of side-to-side grooves and supported by a shaft (39) which is parallel to the drive shaft (7), wherein one of the grooves of said intermediate pulley (20, 21) or drive pulley (18) consists of a variable pulley,
- means (48 - 52) for tensioning the belt transmission (19 - 22) are linked with the manually operated handle (29) through the control transmission (30) in the prolongation of the gear lever (27), and are associated with resilient means (49) having a calibration force which is greater than that of the resilient means (28) associated with said gear lever and able to allow a movement of said tensioning means causing an increase of the width of the groove on the variable pulley (20) once the gear lever (27) has attained the active position thereof, by means of further operating the manually operated handle (29) in opposition to the action of said resilient means.

4. Self-powered machine according to claim 3, characterized in that said tensioning means (48 - 52) are adapted for placing the belt transmission (19 - 22) in a disengaged position when the manually operated handle (29) is in a position corresponding to the active position of the gear lever (27), and for bringing said transmission in a low speed engagement position once said position is overrun.

5. Self-powered machine according to claims 3 or 4, characterized in that said belt transmission comprises:
- a pair of belts: namely, one drive belt (19) linking said drive pulley (18) and one of the grooves on the intermediate pulley (20, 21), and one driven belt (22) linking the other groove on the intermediate pulley (20, 21) and the driven pulley (23),
- a deflection roll (38) which is interposed in the path of the driven belt (23) and arranged at a tilted angle of 45 degrees.

6. Self-powered machine according to claim 5, characterized in that the tensioning means comprise a clutch lever (48) which is pivotally mounted on frame (1) so as to be able to pivot about an axis which is parallel to the drive shaft (7), and a clutch roll (50) supported on said clutch lever and arranged for engaging one of the strands of the drive belt (19) when said lever is pivoted.

7. Self-powered machine according to claim 6, characterized in that the clutch lever (48) supports another, so-called tensioning roll (51) which is arranged for engaging the second strand of the drive belt (19) in order to obtain the maximum tension in said belt, wherein said maximum tension corresponds to the maximum speed.

## Patentansprüche

1. Fahrbare Maschine wie zum Beispiel Rasen- oder Buschmäher, die ein von vier Rädern (2 - 5) getragenes Chassis (1), einen mit einer Antriebswelle (7) ausgestatteten Motor zum Rotationsantrieb einer Schneideklinge, eine Empfangswelle (8), die sich transversal vor- oder hinterliegend zwischen zwei, sogenannten Antriebsrädern (2, 3), erstreckt und mit den Antriebsrädern durch Transmissionselemente (14 - 17) verbunden ist und eine die Antriebswelle (7) und die Empfangswelle (8) verbindende mechanische Transmissionseinheit (18 - 26) umfaßt, wobei die Maschine dadurch gekennzeichnet ist, dass:
- die Empfangswelle (8) sich aus drei longitudinalen Abschnitten zusammensetzt, die aus einem Zentralabschnitt (9) und aus zwei Antriebsspitzen (10, 11) bestehen, wobei jede dieser Wellespitzen mit einem Antriebsrad (2, 3) verbunden und an den Zentralabschnitt (9) mittels einer einseitig gerichteten Verbindungsvorrichtung (12, 13) gelagert ist,
- die mechanische Transmissionseinheit die folgende Glieder umfaßt:
* eine auf die Antriebswelle (7) gelagerte Antriebsriemenscheibe (18),
* eine auf eine zur Empfangswelle (8) parallele Zwischenwelle (24) gelagerte Empfangsriemenscheibe (23), die sich nahebei der Empfangswelle befindet,
* eine die Antriebs- (18) und die Empfangsriemenscheiben (23) verbindende Transmission (19 - 22) des Riementyps,
* ein Getriebe (25, 26) zur Verbindung der Zwischenwelle (24) und des Zentralabschnittes (9) der Empfangswelle (8),
* einen sogenannten Getriebshebel (27), der die Zwischenwelle (24) trägt und beweglich so an dem Chassis (1) befestigt ist, dass er um eine transversale Achse parallel zur Zwischenwelle zwischen zwei, sogenannten aktiv und passiv, extremen Positionen schwenken kann, die jeweils dem eingekuppelten oder ausgekuppelten Zustand des Getriebes (25, 26) zur Verbindung der Zwischen- (24) und der Empfangswelle (8) entsprechen, wobei der Getriebshebel mit elastischen Mitteln (28) verbunden ist, die zu seiner Unterstützung in seiner passiven Position angepaßt sind,
* einen Bedienungshebel (29) zur manuellen Bedienung, der mit dem Getriebshebel (27) durch eine Bedienungstransmission (30) verbunden ist, die angepaßt ist, um den Hebel entgegen der Wirkung der elastischen Mittel in seine aktive Position zu schwenken,
- Friktionsbremsmittel (33) mindestens einem Ende (10, 11) der Empfangswelle gegenüber angeordnet und so mit dem Getriebshebel (27) verbunden sind, um von ihm angetrieben zu werden und einerseits in Berührung mit mindestens einem Wellenende (10, 11) zu kommen und deren Rotation in der passiven Position des Hebels (27) zu sperren und andererseits vom Wellenende gelöst zu werden und deren Rotation in der aktiven Position des Hebels zuzulassen.

2. Selbst antreibende Maschine gemäß des Anspruchs 1, dadurch gekennzeichnet, dass:
- der Getriebshebel (27) und die Bremsmittel (33) so angeordnet sind, um eine sogenannte Totpunktzwischenlage aufweisen zu können, in der das Getriebe (25, 26) zur Verbindung der Zwischen- (24) und der Empfangswelle (8) entkuppelt ist und die Bremsmittel (33) von der Empfangswelle (8) gelöst sind,
- der Bedienungshebel (29) zur manuellen Bedienung eine der vorgenannten Totpunktposition entsprechende Sperrungszwischenlage aufweist.

3. Selbst antreibende Maschine gemäß einem der Ansprüche 1 oder 2, dadurch gekennzeichnet, dass:
- die Treibriementransmission (19 - 22) vom Keilriementyp ist und eine doppelte Zwischenriemenscheibe (20, 21) umfaßt, die zwei nebeneinanderliegende Rillen besitzt und von einer parallel zur Antriebswelle (7) liegenden Welle (39) getragen wird, wobei eine der Rillen der Zwischenriemenscheibe (20, 21) oder die Antriebsriemenscheibe (18) aus einer veränderlichen Riemenscheibe besteht,
- Elemente (48 - 52) zur Erzeugung der Spannung der Riementransmission (19 - 22) am Bedienungshebel zur manuellen Bedienung (29) durch die Bedienungstransmission (30) in Verlängerung des Getriebshebels (27) angebracht sind und an elastische Mittel (49) angeschlossen sind, die eine höhere Kalibrationskraft aufweisen als jene der mit dem Getriebshebel verbundenen elastischen Mittel (28) und die angepaßt sind, um eine Verschiebung der Elemente zur Erzeugung der Spannung zuzulassen, zur Hervorrufung einer Vergrößerung der Weite der Rille der variablen Riemenscheibe (20) im Falle dass der Getriebshebel (27) durch eine auf den Bedienungshebel zur manuellen Bedienung (29) entgegen der Aktion der elastischen Mittel ausgeübte zusätzliche Aktion seine aktive Position erreicht.

4. Selbst antreibende Maschine gemäss dem Anspruch 3, dadurch gekennzeichnet, dass die Elemente zur Erzeugung der Spannung (48 - 52) angepaßt sind, damit sich die Riementransmission (19 - 22) in einer entkuppelten Position befindet wenn der Bedienungshebel (29) zur manuellen Bedienung in der der aktiven Position des Getriebshebels (27) entsprechenden Position liegt und um die Transmission in eine Einkuppelungsposition für geringe Geschwindigkeit zu bringen im Falle, dass diese Position überschritten wird.

5. Selbst antreibende Maschine gemäß einem der Ansprüche 3 oder 4, dadurch gekennzeichnet, dass die Riementransmission
- zwei Riemen: nämlich einen die Antriebsriemenscheibe (18) mit einer der Rillen der Zwischenriemenscheibe (20, 21) verbindenden Antriebsriemen (19) und einen die andere Rille der Zwischenriemenscheibe (20, 21) und die Empfangsriemenscheibe (23) verbindenden Empfangsriemen (22),
- eine Vorlegerolle (38), die in die Strecke des Empfangsriemens (23) zwischengeschaltet und in einem Winkel von 45° geneigt ist, umfaßt.

6. Selbst antreibende Maschine gemäss dem Anspruch 5, dadurch gekennzeichnet, dass die Elemente zur Erzeugung der Spannung einen auf dem Chassis (1) solcherart beweglichen Kupplungshebel (48), dass er um eine Achse drehen kann, die parallel zur Motorachse (7) liegt und eine von dem Kupplungshebel getragene Kupplungsrolle (50), die angeordnet ist, um bei einer Drehung des Hebels in Kontakt mit einem Teilriemenabschnitt des Antriebsriemens (19) zu kommen, umfassen.

7. Selbst antreibende Maschine gemäss dem Anspruch 6, dadurch gekennzeichnet, dass der Kupplungshebel (48) eine zweite, sogenannte Spannungsrolle (51) trägt, die angeordnet ist, um in Kontakt mit einem zweiten Teilriemenabschnitt des Antriebsriemens (19) zu kommen, und zwar solcherart, um die maximale, der höchsten Geschwindigkeit entsprechende Spannung des Treibriemens zuzulassen.
